# EUROPEAN PATENT APPLICATION

(11) **EP 3 715 596 A1**
(43) Date of publication of application: **30.09.2020**
(21) Application number: 20166181.6
(22) Date of filing: 27.03.2020
(51) Int. Cl.: F01N 3/027, F01N 3/08, F01N 3/20

(54) **APPARATUS, VEHICLE AND METHOD**

(30) Priority: 27.03.2019 GB 201904232
(71) Applicant: Johnson Matthey Public Limited Company, London EC4A 4AB (GB)
(72) Inventor: GIDNEY, Jeremy Temple, Royston, Hertfordshire SG8 5HE (GB); OAKES, Daniel Charles Howard, Royston, Hertfordshire SG8 5HE (GB); O'CONNELL, Timothy, Royston, Hertfordshire SG8 5HE (GB)
(74) Representative: Lenden, Philip

(57) **Abstract**

An apparatus is provided for the catalytic treatment of exhaust gas from an internal combustion engine comprising:
a. a casing having an exhaust gas inlet and a treated exhaust gas outlet;
b. a heater disposed within the casing, through which exhaust gas may flow; and
c. a catalyst article disposed within the casing adjacent to the heater, through which exhaust gas can flow;
wherein the heater comprises an electrically resistive wire mounted on an electrically insulating frame.

## Description

### Field of the Invention

The present invention relates to an apparatus and method for catalytically treating exhaust gas from an internal combustion engine. The present invention further relates to a vehicle comprising such an apparatus.

### Background of the Invention

Internal combustion engines produce exhaust gases containing a variety of pollutants, including nitrogen oxides ("NOₓ"), carbon monoxide, and uncombusted hydrocarbons, which are the subject of governmental legislation. Emission control systems are widely utilized to reduce the amount of these pollutants emitted to atmosphere. Conventional emissions control systems (*e.g*. catalysts such as three-way catalysts or diesel oxidation catalysts) include a catalytic substrate. Typically, such catalytic substrates are ceramic substrates (*e.g*. a ceramic honeycomb monolith substrate) or metallic substrates coated with a catalytic material. Alternatively, the substrate itself may be composed of catalytic material (*e.g*. an extruded catalyst). Typically, such emission control systems achieve very high efficiencies once they reach their operating temperature (typically, 200° C. and higher). However, these systems are relatively inefficient below their operating temperature, such as during the "cold start" period.

As even more stringent national and regional legislation lowers the amount of pollutants that can be emitted from diesel or gasoline engines, reducing emissions during the cold start period is becoming a major challenge. Thus, methods for reducing the level of NOₓ and hydrocarbons emitted during cold start conditions continue to be explored.

One way of addressing the challenges encountered during the cold start period is to employ an electrically heated catalyst (EHC), which preheats the catalyst and thereby speeds up the onset of the catalytic reactions. Such EHCs may be positioned upstream of a conventional catalytic monolith.

Commercially available EHCs typically comprise metallic honeycomb substrates, which may be coated with catalytic material. Typically, such EHC's comprise a first metallic honeycomb substrate, which functions as a heating element, affixed to a second metallic honeycomb substrate of higher resolution (*i.e*. higher number channels per square inch). The heating element is affixed to the second honeycomb substrate by way of one or more electrically insulating support elements. However, the presence of such support elements reduces the geometric surface area of honeycomb available for coating with a catalytic material, and consequently limits the surface area of catalytic material available to take part in the catalytic treatment of exhaust gas.

Further, such EHC's may be complex and expensive to manufacture.

Examples of electrically heatable substrates are described in US 5,146,743 and US 6,513,324.

EP 0579415 relates to an apparatus for use in an engine exhaust system containing a catalyst and a non-catalytic heater upstream of the catalyst. The heater has at least 15 heated channels per square centimetre, the heated channels being less than 1.0 cm in length, so that in operation the exhaust gas passes through the channels and is thereby heated before it reaches the catalyst, the heater being such that the heated gas leaving the channels has at least to some extent turbulent flow. The heater may be resistance heated by electrical power and the channels of the heater are preferably provided by one or more heated wire gauzes.

There remains a need for improved systems which address the challenges encountered during the cold start period.

### Summary of the Invention

According to a first aspect of the present invention, there is provided an apparatus for the catalytic treatment of exhaust gas from an internal combustion engine comprising:
a. a casing having an exhaust gas inlet and a treated exhaust gas outlet;
b. a heater disposed within the casing, through which exhaust gas may flow; and
c. a catalyst article disposed within the casing adjacent to the heater, through which exhaust gas can flow;
wherein the heater comprises an electrically resistive wire mounted on an electrically insulating frame.

According to a further aspect of the invention there is provided a method of catalytically treating an exhaust gas from an internal combustion engine, which method comprises passing the exhaust gas through an apparatus comprising:
a. a casing having an exhaust gas inlet and a treated exhaust gas outlet;
b. a heater disposed within the casing, through which exhaust gas may flow; and
c. a catalyst article disposed within the casing adjacent to the heater, through which exhaust gas can flow;
wherein the heater comprises an electrically resistive wire mounted on an electrically insulating frame.

According to a further aspect of the present invention there is provided a vehicle comprising an internal combustion engine and an apparatus for the catalytic treatment of exhaust gas from the internal combustion engine, which apparatus comprises:
a. a casing having an exhaust gas inlet and a treated exhaust gas outlet;
b. a heater disposed within the casing, through which exhaust gas may flow; and
c. a catalyst article disposed within the casing adjacent to the heater, through which exhaust gas can flow;
wherein the heater comprises an electrically resistive wire mounted on an electrically insulating frame.

### Brief description of the drawings

**Figure 1** shows a diagrammatic representation of a heater which may be employed in an apparatus according to the present invention (Frame A).
**Figure 2** shows an electrically insulating frame suitable for use in the heater of the apparatus according to the present invention (Frame B).
**Figure 3** shows a heater suitable for use in an apparatus according to the present invention.
**Figure 4** shows a heater suitable for use in an apparatus according to the present invention.
**Figure 5** shows a heater suitable for use in an apparatus according to the present invention.
**Figure 6** shows a heater suitable for use in an apparatus according to the present invention.
**Figure 7** shows a heater suitable for use in an apparatus according to the present invention.
**Figure 8** is a graph showing the results of heating tests of heaters suitable for use in an apparatus according to the present invention.
**Figure 9** is a graph showing the results of heating tests of heaters suitable for use in an apparatus according to the present invention.
**Figure 10** is a graph showing the results of heating tests of heaters suitable for use in an apparatus according to the present invention.
**Figure 11** is a graph showing the results of a heating test of a heater suitable for use in an apparatus according to the present invention.
**Figure 12a** shows an electrically insulating frame suitable for use in the heater of the apparatus according to the present invention (Frame A2); and **Figures 12b** and **12c** show heaters suitable for use in apparatuses according to the present invention.
**Figure 13a** and **13b** show an electrically insulating frame suitable for use in the heater of the apparatus according to the present invention (face views of Frame C); and **Figure 13c** shows a heater suitable for use in an apparatus according to the present invention.
**Figure 14a** shows an electrically insulating frame suitable for use in the heater of the apparatus according to the present invention (Frame D); and **Figures 14b** and **14c** show heaters suitable for use in apparatuses according to the present invention.
**Figure 15a** shows an electrically insulating frame suitable for use in the heater of the apparatus according to the present invention (Frame E); and **Figure 15b** shows a heater suitable for use in an apparatus according to the present invention.
**Figure 16** is a graph showing DPG high power test results of a heater according to Example 6 of the present invention.
**Figure 17** is a graph showing DPG test results for resistive heaters according to Examples 6-10 of the present invention.
**Figure 18** is a graph showing heat transfer coefficient measurements for heaters according to Examples 6-10 of the present invention.

### Detailed description of the invention

The present invention will now be further described. In the following passages different aspects of the invention are defined in more detail. Each aspect so defined may be combined with any other aspect or aspects unless clearly indicated to the contrary. In particular, any feature indicated as being preferred, optional or advantageous may be combined with any other feature or features indicated as being preferred, optional or advantageous. It is intended that the features disclosed in relation to the apparatus may be combined with those disclosed in relation to the method and vice versa.

The apparatus of the present invention comprises a casing in which the heater and the catalyst article are disposed. The casing comprises an exhaust gas inlet and a treated exhaust gas outlet. The casing may comprise or consist essentially of a metallic sleeve. The casing may have one or more markings to denote the inlet end/and or the outlet end thereof. The casing may be axially circular or oval in cross-section. The casing has an axial length which is greater than or equal to the sum of the axial length of the heater and the axial length of the catalyst article.

The catalyst article is disposed adjacent the heater and may be at a position which is upstream or downstream of the heater.

The term "adjacent" as used herein denotes that the catalyst article is disposed proximal to the heater within the casing. However, it does not necessarily require that the heater and the catalyst article are in physical contact one another; i.e., having abutting surfaces, though such an arrangement is not excluded.

By "upstream" it is meant a position which, in use, is closer to the engine manifold vis-a-vis the flow of the exhaust gas leaving the engine (*i.e*. closer to the exhaust gas inlet of the casing), and by "downstream" the converse meaning is intended. Preferably, the catalyst article is disposed within the casing at a position downstream of the heater. Thus, exhaust gas entering the apparatus via the inlet of the casing will first contact the heater prior to contacting the catalyst article.

By positioning a heater upstream of a catalyst article, exhaust gas may be heated prior to its contact with the catalyst article, and thus, "*light-off*" of the catalyst article (i.e. the effective operating temperature) may be achieved faster. Operation of the heater may therefore be advantageous under cold-start conditions, or conditions where the catalyst article may cool to a temperature below its effective operating temperature, such as during idling of a vehicle or when used with a vehicle having an engine with stop/start mode.

The heater of the apparatus of the present invention comprises an electrically resistive wire mounted on an electrically insulating frame. The heater is such that it allows the passage of exhaust gas therethrough, i.e. the heater comprises one or more flow paths allowing exhaust gas to pass through the heater in the flow direction (i.e. towards the outlet of the of the casing).

Advantageously, the heater may create turbulent flow of the exhaust gas passing therethrough. Turbulent flow may assist with transfer of heat to the exhaust gas.

As used herein the term "wire" refers to an elongate filament of material having a substantially greater longitudinal dimension as compared to its thickness or diameter. The wire may preferably have a circular cross section, however, other cross sections such as elliptical or polygonal may suitable be used.

As used herein, the term "electrically resistive wire" refers to a wire comprising an electrically conductive material which generates heat on the flow of an electrical current therethrough.

The electrically resistive wire may be a wire composed of any suitable material which is electrically conductive, and which generates heat on flow of an electrical current therethrough (*i.e*. an electrically resistive material). The electrically resistive material may be metal or metal alloy. Useful metals include silver, gold, platinum, rhodium, ruthenium, iron, chrome, titanium, nickel, molybdenum, yttrium and alloys of these metals, for example, platinum/rhodium alloy, nickel/chrome alloy (*e.g*. Nichrome), iron/chrome alloy (*e.g*., FeCrAlloy), and/or nickel/titanium alloy (*e.g*. NiTinol). The electrically resistive wire may comprise, or consist essentially of, Nichrome.

The resistance of the electrically resistive wire may be in the range 0.0005 to 20 ohm, preferably 0.5 to 10 ohm.

The electrically resistive wire must be sufficiently resilient or tough to resist abrasion from exhaust particulates and have sufficient thickness and conductivity to carry the electrical load and generate the required amount of heat. Selection of an electrically resistive wire having appropriate thickness or diameter is within the capabilities of the skilled person. By way of example, the wire may have a generally circular cross-section and have a diameter of ≥ 0.1 mm, such as ≥ 0.2 mm, or ≥ 0.5mm. The diameter of the wire may be ≤ 2 mm, for example, ≤ 1.5 mm.

The length of the wire employed will depend on a number of factors, for example, the shape and dimensions of the frame, the desired orientation of the wire and the manner in which it is to be mounted on the frame and the desired heat output.

The apparatus of the present invention may comprise a single electrically resistive wire, suitably mounted on the electrically insulating frame. Alternatively, the apparatus may comprise multiple electrically resistive wires, suitably mounted to the frame. For example, two-or more wires may be intertwined prior to being mounted on the frame. Alternatively, the electrically resistive wire may be helical.

The electrically insulating frame provides rigid support to the wire such that, in use, the wire's desired orientation can be maintained relative to the flow of exhaust gas.

Further, the frame may act to provide an electrically insulating barrier between the wire and the casing of the apparatus, thereby preventing electrification of the casing.

Typically, the shape and dimensions of the frame correspond to the cross-section of the casing. For example, where the casing is circular in cross-section, the frame may have an annular or circular cross-section with an outer diameter which fills the cross-section of the casing. Alternatively, the frame may have an "X" shaped cross-section when viewed along the axis of the casing.

Typically, the frame comprises means of retaining the wire in the desired orientation. For example, the frame may comprise suitable notches, grooves or apertures for holding or attaching to the wire.

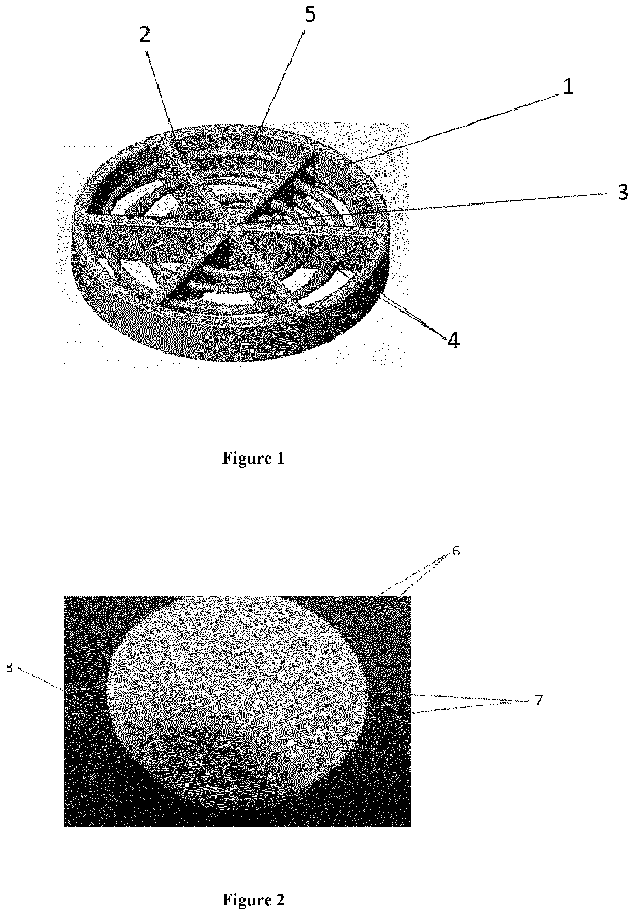

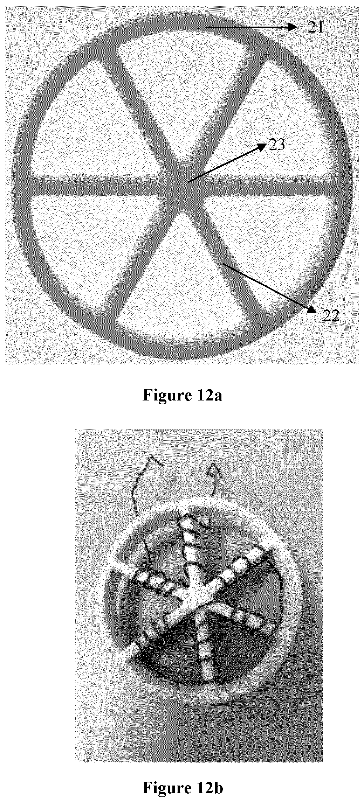

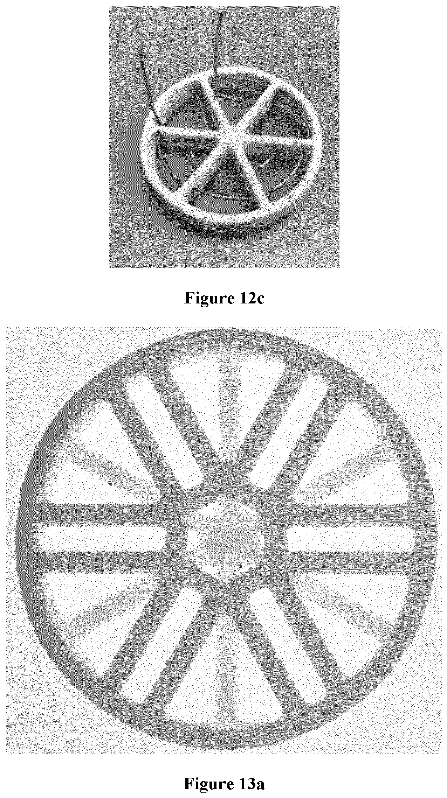

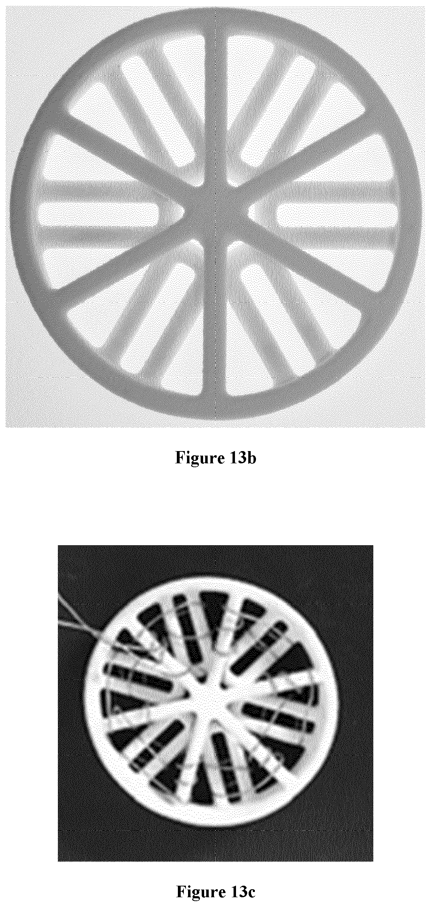

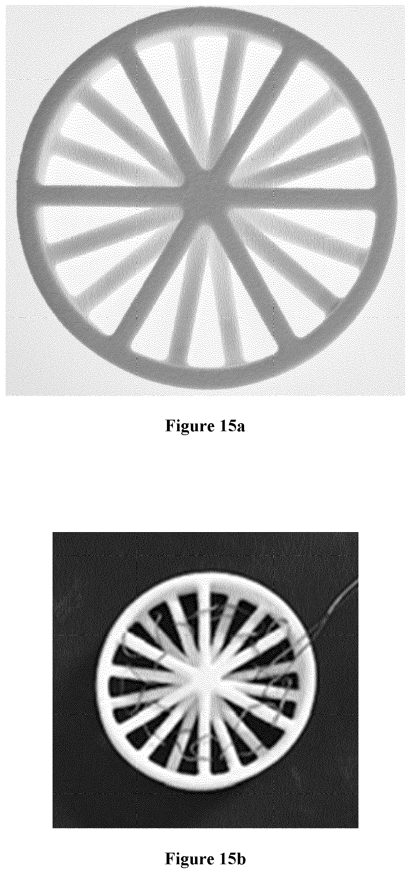

Preferably, the frame comprises an annular member and one or more crossmembers or vanes. For example, the crossmembers may form a series of spokes (*e.g., see* **Figures 1** **and** **12a****)** or layered spokes (*e.g*., *see* **Figures 13a****,** **13b****,** and **15a****)** within the annular member. The wire may be mounted on such a frame by wrapping the wire around each spoke in a coiled fashion. Alternatively, the crossmembers may comprise apertures through which the electrically resistive wire may be threaded or wound. The shape and dimensions of the apertures are not critical provided that they are adequate to retain the wire in the desired orientation, without restricting the ability of the heater to provide heat to the exhaust gas.

The electrically resistive wire may be mounted on the frame in a spiral or coil arrangement. For example, the electrically resistive wire may be mounted on the frame in a multiple-coil arrangement (e.g. the wire may be coiled around the frame multiple times).

In a preferred embodiment, the frame comprises an annular member and one or more cross-members, wherein each cross-member comprises apertures through which the wire may be threaded in a generally spiral or coiled arrangement.

Alternatively, the frame may comprise a disc, having a cross-sectional shape corresponding to the cross-section of the casing, which disc comprises a plurality of channels extending therethrough, the channels being defined by a plurality of walls. In such an embodiment, an end-face of the disc may be provided with suitable means of mounting the wire thereto. For example, an end-face of the disc may be provided with a groove within which the wire may be accommodated.

Alternatively, the frame may take the form of a static mixer, suitable for use in a selective catalytic reduction (SCR) process.

In an SCR process, a gaseous reductant, typically ammonia, is added to an exhaust gas prior to the exhaust gas contacting an SCR catalyst. Ammonia may be supplied indirectly to the location of the SCR catalyst in the form of an aqueous urea solution, which undergoes decomposition to form ammonia. For this decomposition to take place in an optimal manner, sufficiently high temperatures (preferably above 200° C., more preferably at least approximately 350° C.) are required. Further, for the SCR process to operate in an optimal manner, it is desirable to distribute the aqueous urea solution and/or the ammonia formed therefrom as uniformly as possible in the exhaust gas stream prior to its contact with the SCR catalyst. To enhance distribution of the reductant in the exhaust gas, static mixers may be employed to disturb the flow.

Where the frame takes the form of such a static mixer, it may comprise a series of vanes arranged in an annular configuration. The vanes may comprise apertures for supporting the electrically resistive wire in its desired orientation.

The shape and dimensions of the frame may be such that the surface area of the wire available for contact with the exhaust gas flowing through the heater is sufficient to provide the desired level of heating to the exhaust gas. Preferably, the axial length of the frame (*i.e*. its length in the direction of flow of exhaust gas) is in the range 0.2 to 2.0 cm, more preferably 0.4 to 1.2 cm. Typically, the axial length of the frame is less than the axial length of the catalyst article.

The electrically insulating frame may be made from any suitable electrically insulating material which is sufficiently resilient or tough to resist abrasion from exhaust particulates during operation. Preferably, the frame comprises a ceramic substrate which is electrically non-conductive.

Preferably, the frame comprises a porous material. For example, the frame may comprise a porous ceramic substrate. In particular, the frame may comprise a material having a porosity in the range 10 to 75%, for example, 30 to 70%.

Advantageously, the frame may comprise a material which is heat-transmissive, such that the frame itself becomes heated when exposed to resistive heat generated in use by the electrically resistive wire.

Where the frame comprises a ceramic substrate, the ceramic substrate may comprise any suitable ceramic material. Suitable ceramic materials include alumina (for example, alpha-alumina), cordierite, aluminium titanate, silicon carbide, mullite, zirconia (for example, ytrria-stabilised zirconia) or mixtures thereof. Preferably, the frame is a ceramic substrate comprising alpha alumina.

Preferably, the frame of the heater may itself be catalytic. For example, the frame may comprise or be coated with a catalytic material. In a preferred embodiment, the frame comprises a ceramic substrate coated with a catalytic material.

Advantageously, where the frame of the heater is catalytic shorter periods of resistance heating may be required to achieve light-off of the catalyst article compared to an apparatus where a non-catalytic heater is positioned upstream of a catalyst article.

The catalytic material may be a catalyst suitable for catalysing the conversion of one or more of the components of the exhaust gas. For example, the catalytic material may comprise an oxidation catalyst, such as a diesel oxidation catalyst, an SCR catalyst, a three-way catalyst composition, or an ammonia slip catalyst. Preferably, the catalyst material comprises an oxidation catalyst or a three-way catalyst.

Alternatively, where the frame takes the form of a static mixer for use in an SCR process, the catalytic material preferably comprises a catalyst suitable for catalysing the conversion of urea to form ammonia.

Where the frame is a ceramic substrate, the frame may be prepared by extrusion, optionally followed by washcoating to apply a coating of catalytic material. To produce an extruded article, a ceramic extrusion composition whose rheological properties have been set so as to be suitable for the extrusion process is generally provided. This extrusion composition is a plastic (*i.e*. easily shaped or mouldable), viscous composition. To set the desired rheological properties of the extrusion composition, organic additives are typically added to the extrusion composition. The resulting plastic material is then moulded, for example, using an extrusion press or an extruder including an extrusion die, and the resulting mouldings are dried and calcined. The organic additives are "burnt out" during calcination of the extrudate. Where it is desired that the frame itself comprises catalytic material (as opposed or in addition to being coated with a catalytic material), catalytically active component is also present in the extrusion composition.

Alternatively, the frame may be prepared by additive layer manufacturing.

Additive layer manufacturing (ALM) is a technique whereby 2-dimensional layers (2D) of material are sequentially laid down and fused or bound together to fabricate a 3-dimensional (3D) solid object (*i.e*. a shaped unit). ALM may also be referred to as Additive Manufacturing (AM), 3D-printing, freeform fabrication and/or digital fabrication. ALM processes are enabled by conventional 3D design computer packages that allow design of the shaped unit as a so-called "CAD file" which is a simple mesh depiction of the 3D shape. Using the design software, the CAD file is digitally cross-sectioned into multiple two-dimensional slices, which are the basis for the fabrication process. The fabrication equipment, reading the two-dimensional pattern, then sequentially deposits layer upon layer of material corresponding to the 2D slices. In order that the shaped unit has structural integrity, the material is bound, cured, or fused together as the layers are deposited. The process of layer deposition and binding/fusion is repeated until the required 3D shaped unit is generated. Typically, the 3D shaped unit will then undergo a sintering step which causes the particles of the printed material to fuse together and become densified, thereby providing an article with increased strength.

A particular advantage of employing ALM techniques to manufacture the frame, is that a frame may be prepared having intricate design features, such as grooves, notches or apertures suitable for holding or attaching to an electrically resistive wire. Such features may be more difficult to achieve using extrusion methods.

Various ALM techniques may be suitable for manufacturing the frame of the present invention, for example, powder bed techniques such as material-jetting, binder-jetting and powder bed fusion, stereolithography and three-dimensional screen printing.

Once a suitable frame has been prepared, the electrically resistive wire may be mounted thereon, for example by threading the wire through apertures present in the frame. Prior to mounting the wire, the frame may undergo a washcoating process to apply a coating comprising catalytic material. Alternatively, where ALM is employed, the frame may be manufactured around an electrically resistive wire.

The catalyst article may comprise a substrate being coated with a washcoat comprising catalytic material. Alternatively, the catalyst may comprise a substrate which itself is composed of catalytic material (*i.e.* an extruded catalyst).

The catalyst article may, for example, comprise a flow-through substrate (*e*.*g*. a monolithic flow-through substrate) or a filter substrate (*e*.*g*. a monolithic wall-flow filter).

A flow-through substrate generally comprises a plurality of channels, typically extending therethrough, wherein each channel is open at both ends (i.e. an open end at the inlet and an open end at the outlet). The channels are formed between a plurality of walls. A flow-through monolithic substrate comprising an array of parallel channels extending may also be referred to as a honeycomb monolithic substrate.

By contrast, a filter substrate comprises a plurality of channels, wherein each channel has an open end and a closed end (*e.g*. a blocked or plugged end). Each channel is typically separated from an adjacent or neighboring channel by a wall. The wall comprises, or consists essentially of, a porous material.

Flow-through substrates and filter substrates are well known in the art.

The catalyst article may be a diesel particulate filter (DPF), a lean NOₓ trap (LNT), a lean NOₓ catalyst (LNC), a selective catalytic reduction (SCR) catalyst, a diesel oxidation catalyst (DOC), a catalysed soot filter (CSF), a selective catalytic reduction filter (SCRF™) catalyst, an ammonia slip catalyst (ASC), a cold start catalyst (dCSC), a gasoline particulate filter (GPF) or a three-way catalyst (TWC). The catalyst article may be a zoned or layered catalyst, wherein different zones or layers may comprise different catalytic materials.

Where the catalyst article is an SCR catalyst, the heater may be positioned upstream of the catalyst article and the frame may take the form of a static mixer capable of disturbing the flow of exhaust gas. In such an embodiment, preferably, the apparatus further comprises a means for introducing urea or ammonia precursor into the casing at a position upstream of the heater.

The axial length of the catalyst article (*i.e*. its length in the direction of flow of exhaust gas) is typically greater than the axial length of the frame of the heater. In particular, the axial length of the frame may be less than 30% of the axial length of the catalyst article. Preferably, the axial length of the frame is less than 20% of the axial length of the catalyst article, such as less than 13% (*e.g*. less than 10%) of the axial length of the catalyst article.

A gap may be present between the heater and the catalyst article. The gap may have a length of from 1 mm to 50 mm, as measured in the direction of the axial length of the heater and the catalyst article. Alternatively, no gap may be present between the heater and the catalyst article.

The apparatus may comprise one or more further catalyst articles disposed within the casing. For example, the apparatus may comprise an SCR catalyst which is disposed within the casing downstream of the heater, followed by an ASC catalyst disposed with the casing downstream of the SCR catalyst.

The apparatus of the present invention may further comprise means for supplying an electrical current to the electrically resistive wire of the heater, in order that heat is generated in use. The apparatus may therefore comprise suitable electrical power connections for providing a flow of electrical current through the electrically resistive wire. For example, the casing may comprise an electrically insulating supporting element for each electrical power connection. Each electrical power connection may pass through an electrically insulating supporting element.

The apparatus may further comprise means to turn on and off the supply of electrical power to the wire. For example, where the apparatus is employed in a vehicle comprising an internal combustion engine, the apparatus may incorporate means to turn on the heater immediately before (*e.g*. 1-2 seconds before) or immediately after the engine is started. The apparatus preferably also comprises means to switch off the supply of electrical power to the wire once desired operating temperature is reached. A thermocouple may be employed to sense operating temperatures such that the supply of electrical power may be switched on and off as required.

In a preferred embodiment, the apparatus is employed in the exhaust system of a vehicle and the heater is powered by the vehicle's alternator and/or battery.

In use, the apparatus may be employed to treat exhaust gas from an internal combustion engine, such as a vehicular internal combustion engine. The vehicular internal combustion engine may comprise a diesel engine or a gasoline engine.

A further aspect of the invention is a method of treating an exhaust gas comprising passing the exhaust gas through the apparatus described above. Preferably, the exhaust gas is an exhaust gas from a vehicular diesel engine.

A further aspect of the present invention is a vehicle comprising the apparatus described above. The vehicle may comprise an internal combustion engine selected from a diesel engine or a gasoline engine. Preferably, the vehicle comprises a diesel engine.

### Examples

The invention will now be further described with reference to the following examples, which are illustrative, but not limiting of the invention.

### Frame A

Frame A having the shape and dimensions described below was formed from an alumina/titania mixture using a binder-jet powder bed 3D printing technique. Frame A comprised an annular rim (1) and an arrangement of spokes (2) radiating from a central hub (3) to the rim (1). Frame A had an outer diameter 66mm, a height of 10mm, and a wall thickness of 3 mm. The spokes comprised a number of holes (4) arranged such that a wire could be threaded therethrough.

A diagrammatic representation of Frame A having a coiled wire threaded through the holes of the spokes is shown in **Figure 1****.**

### Frame B

Frame B having the shape and dimensions described below was formed from an alumina/titania mixture using an ink-jet powder bed 3D printing technique. Frame B comprises a disc having a plurality of channels (6) extending therethrough, the channels (6) being defined by a plurality of walls (7). At an end-face of the disc, some walls (7) were provided with a groove (8) suitable for accommodating a wire in a single pathway over the face. The frame had an outer diameter of 70mm and a height of 10mm. The channels (6) had an open area of 2mm x 2mm and the walls (7) had a thickness of 3mm, resulting in a resolution of 26 cells per square inch (cpsi). The groove (8) was 1mm wide and 5mm deep.

Frame B is shown in **Figure 2****.**

### Example 1

A NiChrome wire having a diameter of 0.27mm (obtained from Greenweld Permex Ltd) was mounted on Frame A by threading the wire through the holes of the spokes in a radial direction twice, such that the wire formed a double coil or spiral arrangement.

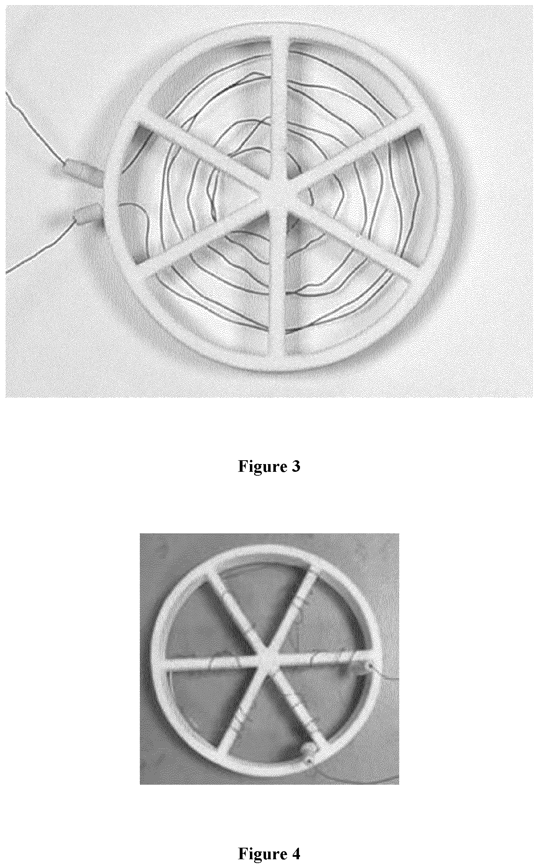

The heater of Example 1 is shown in **Figure 3****.**

### Example 2

A NiChrome wire having a diameter of 0.27mm (obtained from Greenweld Permex Ltd) was mounted on Frame A by wrapping the wire around the spokes.

The heater of Example 2 is shown in **Figure 4****.**

### Example 3

A NiChrome wire having a diameter of 0.5mm (obtained from the Crazy Wire Company Ltd) was mounted on Frame A in the same manner as in Example 2.

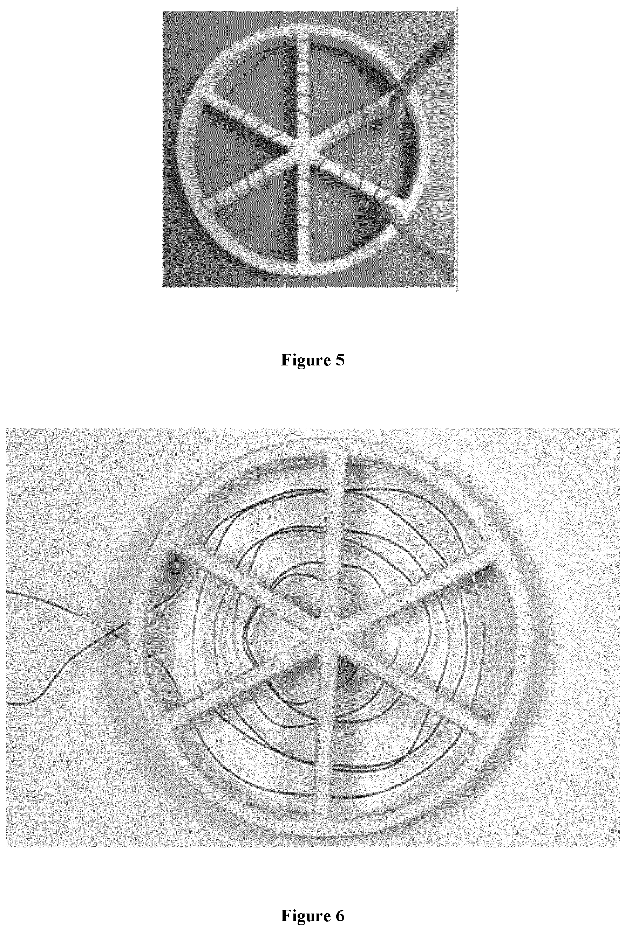

The heater of Example 3 is shown in **Figure 5****.**

### Example 4

A nickel/titanium alloy wire having a diameter of 0.3 mm (obtained from Johnson Matthey) was mounted on Frame A in the same manner as in Example 1.

The heater of Example 4 is shown in **Figure 6****.**

### Example 5

A NiChrome wire having a diameter of 0.5mm (obtained from The Crazy Wire Company Ltd) was mounted on Frame B by pushing the wire into the groove to form a continuous conductive track on the end-face of Frame B.

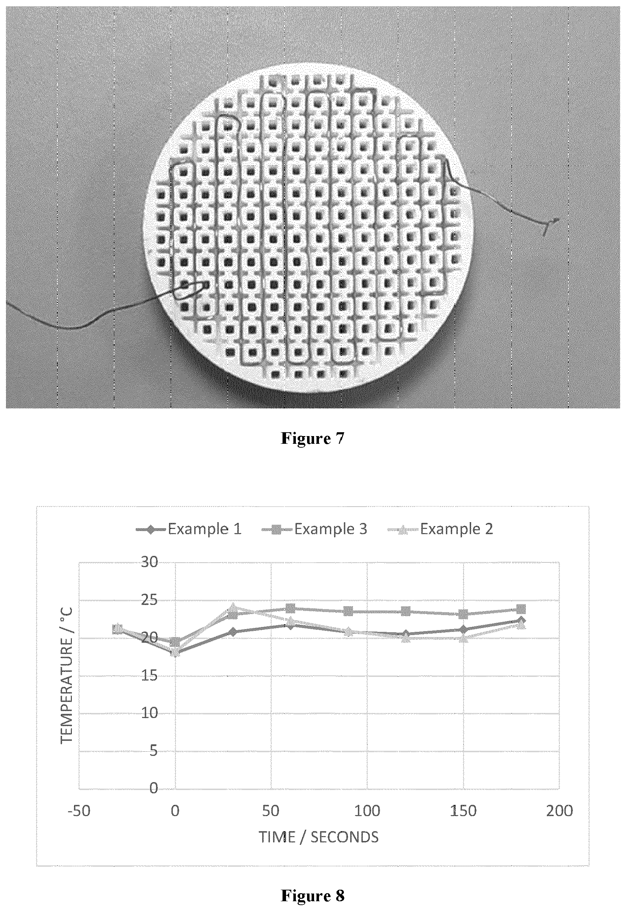

The heater of Example 5 is shown in **Figure 7****.**

### Heating Tests

The heaters prepared in Examples 1 to 5 were each connected to a source of electricity and subjected to airflow testing using a Superflow SF1020PB flowbench set at 20 °C, at sea level. The airflow was set to 20m³hr⁻¹. After 30 seconds of running at steady state, the electrical power to the heater was switched on and the temperature of the air downstream of the heater was measured over a period of up to 200 seconds. The source of electrical power was either power supply (i): an Isotech IPS603D digital control DC power supply (0 - 60V, 0 - 3A); or power supply (ii) an RS Pro RS3005P digital control DC power supply (0 - 30V, 0 - 5A), which was connected to the wire using a combination of banana plugs, insulated cable and alligator clips. Temperature measurements were carried out using a Thermosense Type K Input hand-held Thermocouple Indicator.

**Figure 8** shows the peak air temperature achieved by the heaters of Examples 1, 2 and 3 when powered by power supply (i) operating at maximum volts and maximum amps.

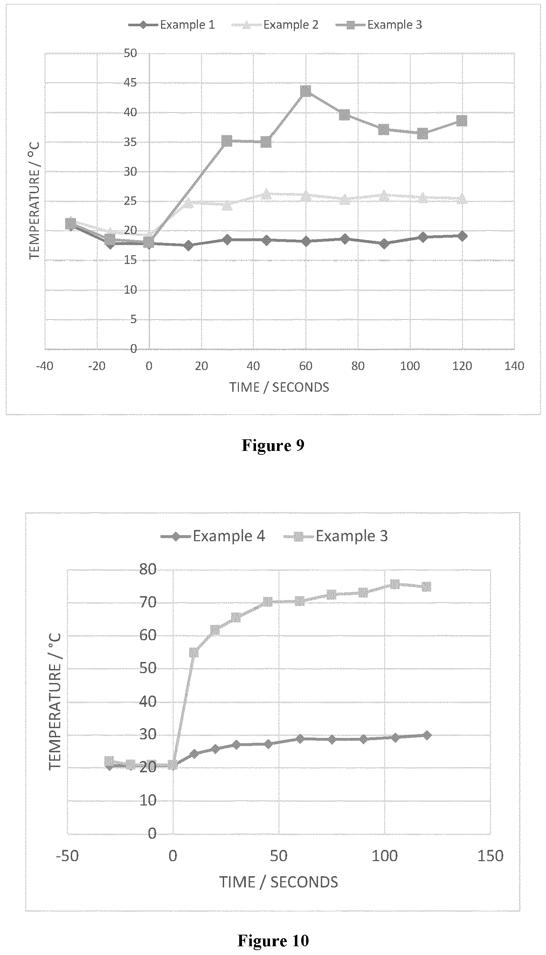

**Figure 9** shows the air temperature achieved by the heaters of Examples 1, 2 and 3 when powered by power supply (ii) operated at a constant power 30 volts. Comparison of **Figures 8** and **9** demonstrates that the resistance heat generated by a given wire may vary depending on the electrical power supplied.

**Figure 10** shows the air temperature achieved by the heaters of Examples 3 and 4 when powered by power supply (ii) operated at a constant power supply of 31 volts. Comparison of **Figures 9** and **10** demonstrates that the resistance heat generated by the heater of Example 3 may be varied by varying the power supply.

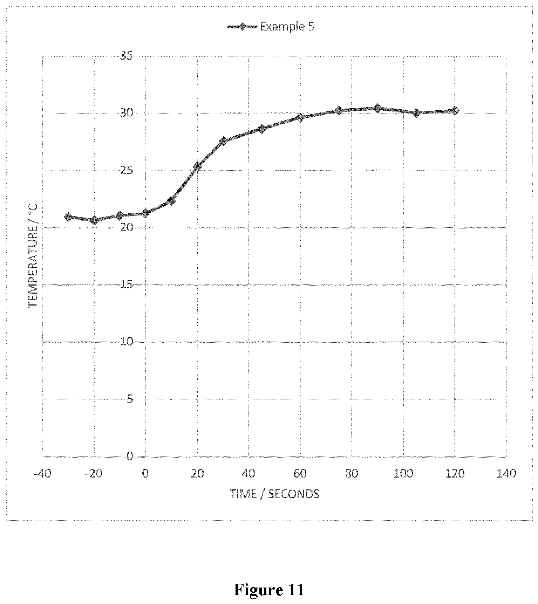

**Figure 11** shows the air temperature achieved by the heater of Example 5 when powered by power supply (ii) operating at a constant power supply of 25 volts.

These results demonstrate that all heaters of Examples 1 to 5, when provided with appropriate electrical power, would be capable of heating an exhaust gas when employed in an apparatus for the catalytic treatment of exhaust gas from an internal combustion engine.

### Frame A2

Frame A2 having the same shape as Frame A was manufactured with different dimensions described below was formed from an alumina/titania mixture using a binder-jet powder bed 3D printing technique. Frame A2 comprised an annular rim (21) and an arrangement of spokes (22) radiating from a central hub (23) to the rim (21). Frame A2 had an outer diameter of 56mm, a height of 10mm, and a wall thickness of 3mm.

Frame A2 is shown in **Figure 12a****.** And exemplary heaters with Frame A2 having a coiled wire threaded around the spokes are shown in **Figures 12b** and **12c**.

### Frame C

Frame C having the shape and dimensions described below was formed from an alumina/titania mixture using a binder-jet powder bed 3D printing technique. Frame C comprised an annular rim and two layers of spokes arranged within the rim of the unit. One of the layers of spokes radiated from a central hub to the rim (in this example, there were 6 spokes). The other layer had an arrangement of parallel pairs of spokes radiating from a central hub to the rim (in this example, there were 6 pairs of spokes from a hexagonal hub). The layers were offset from each other (in this example, each of the radial spokes were arranged parallel to one of the pairs of spokes in the other layer). Frame C had an outer diameter of 56mm, a height of 10mm, a wall thickness of 3mm, and a layer height of 4mm, with a separation of 2mm between the layers.

Frame C is shown in **Figures 13a** and **13** **b** (face views). And a heater with Frame C having a coiled wire threaded around the spokes is shown in **Figure 13c**.

### Frame D

Frame D having the shape and dimensions described below was formed from an alumina/titania mixture using a binder-jet powder bed 3D printing technique. Frame D comprised an annular rim and an arrangement of parallel pairs of spokes radiating from a central hexagonal hub to the rim. Frame D had an outer diameter of 56mm, a height of 10mm, and a wall thickness of 3mm.

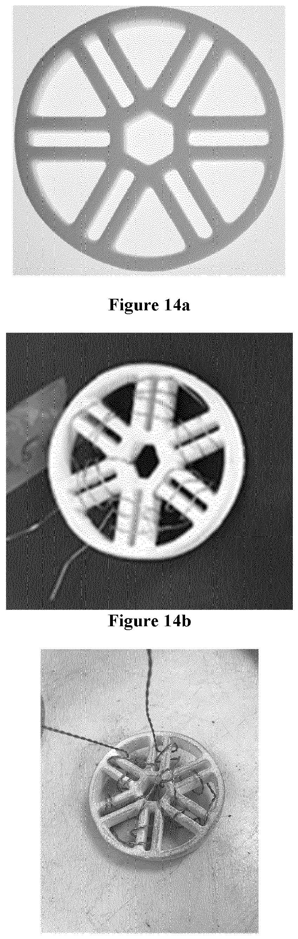

Frame D is shown in **Figure 14a****.** And exemplary heaters with Frame D having a coiled wire threaded around the spokes are shown in **Figures 14b** and **14c****.**

### Frame E

Frame E having the shape and dimensions described below was formed from an alumina/titania mixture using a binder-jet powder bed 3D printing technique. Frame E comprised an annular rim and three layers of spokes arranged within the rim of the unit. Each of the layers of spokes radiated from a central hub to the rim (in this example, there were 6 spokes in each layer). The layers were offset from each other (in this example, there was a 20° offset between subsequent layers). Frame C had an outer diameter of 56mm, a height of 10mm, a wall thickness of 3mm, and layer heights of 2.7, 2.6 and 2.7 mm, with a separation of 1mm between the layers. The layers met at an axial hub at the centre of the part 5mm in diameter.

Frame E is shown in **Figure 15a****.** And a heater with Frame E having a coiled wire threaded around the spokes is shown in **Figure 15b****.**

### Example 6

A NiChrome wire having a diameter of 0.5mm and length of 2m (obtained from Crazy Wire Company Ltd) was bent in half and the two halves were twisted into a double braid and mounted on Frame A2 by wrapping the braided wire around the spokes.

The heater of Example 6 is shown in **Figure 12b****.**

### Example 7

A NiChrome wire having a diameter of 0.5mm and length of 3m (obtained from Crazy Wire Company Ltd) was bent into thirds and the three thirds was twisted into a triple braid and mounted on Frame A2 by wrapping the braided wire around the spokes.

### Example 8

A FeCrAlloy wire having a diameter of 0.5mm and length of 2m (obtained from obtained from the Crazy Wire Company Ltd) was bent in half and the two halves were twisted into a double braid and mounted on Frame A2 by wrapping the braided wire around the spokes.

### Example 9

A NiChrome wire having a diameter of 0.5mm and length of 2m (obtained from Crazy Wire Company Ltd) was bent in half and the two halves were twisted into a double braid and mounted on Frame D by wrapping the braided wire around the spokes.

The heater of Example 9 is shown in **Figure 14c****.**

### Example 10

A NiChrome wire have *a* diameter of 1.0mm and length of 0.5m (obtained from Crazy Wire Company Ltd) was twisted into a shape that could be mounted on Frame A2 such that the wire made 2 rings around the spokes of Frame A2, punctuated by hooks to traverse the spokes.

The heater of Example 10 is shown in **Figure 12c****.**

### DPG High Power Tests

Example 6 has been tested on a Cambustion DPG, which is a commercially available diesel burner rig usually intended to soot load particulate filters, but can be used simply to generate an electrically- or combustion-heated gas flow. A stainless steel exhaust system comprising a reduction cone and feed pipe mated to a pair of 2 inch V-fittings, was fabricated to hold the prototypes within this rig. One of the V-fittings was bored out so that one of the alumina-based pieces would sit within this cavity. Temperature measurements were carried out using 3mm Type-K Thermocouples mounted within the rig.

Resistive Heating tests on DPG used a high-current/low voltage commercially available power supply (from RS Components), which was modified to deliver maximum voltage of 48V, maximum current of 320A, and maximum power of 10kW. The power supply was connected to the component heater using 95mm CSA copper cables.

The testing was performed on the DPG rig using a steady state airflow of 120kghr⁻¹. Electrical power was applied to the heater once a steady flow and temperature had been established. A feed of diesel fuel at 1.1kghr⁻¹ was supplied to the rig burner, with an initial spark to initiate combustion of diesel. There was a rapid increase in temperature of the gas supplied to the test piece, and then the temperature of the feed gas increased progressively until inlet temperature reaches 300 ° C, and then electrical power was turned off. This test was performed at a range of electrical powers supplied to the test piece. The temperature from the heating experiment is measured in front of and behind the heater. The heating impact generated by the test piece by resistive heating was determined by subtracting the inlet temperature from the outlet temperature.

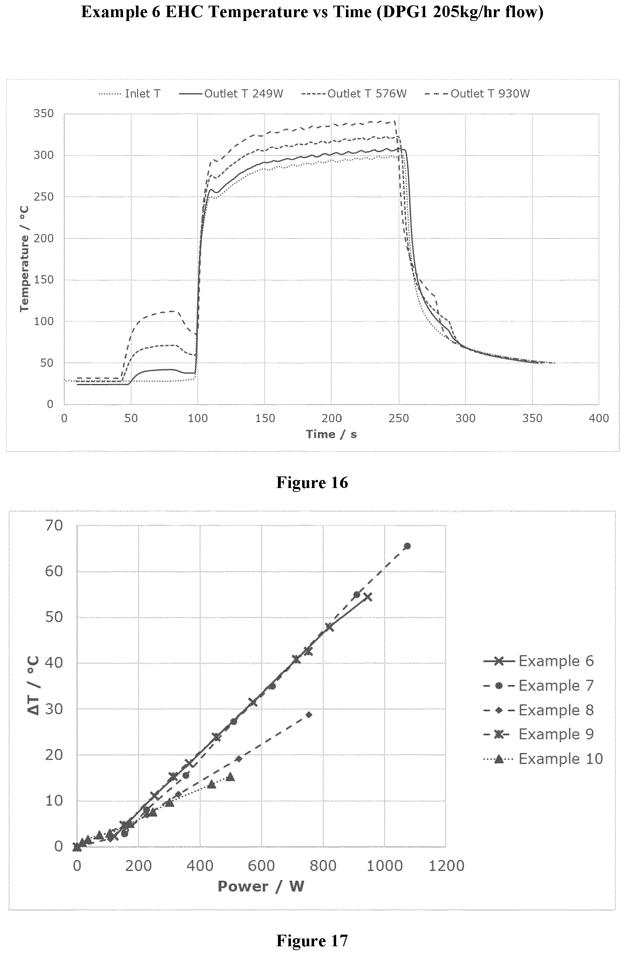

As shown in **Figure 16****,** the outlet temperature of the gas behind the test piece is greater than the inlet temperature once electrical power is applied. In this example, the test piece used was Example 6. The results show largest DT for the test when no fuel is injected; once combustion starts, there is rapid heating of the gas in the rig; followed by a progressive increase in inlet temperature as combustion stabilizes; with a final drop in temperature when combustion is shut off, followed by electrical power off. The DPG rig does not quite reach equilibrium temperature in this testing; however electrical heating increases outlet temperature by an almost constant addition during the progressive heating phase. As the electrical power applied to resistive heater increases, the additional temperature registered at the outlet thermocouple increases. The increase in temperature through resistive heating, ΔT, is the difference between the outlet and inlet temperatures.

### DPG Tests for Resistive Heaters

Examples 6-10 have been tested at a selection of different electrical power inputs, and the average ΔT for each test has been calculated. ΔT may be plotted as the dependent variable against electrical power, as in **Figure 17****.** All of the tested Examples show resistive heating performance, with Examples 6 and 7 attaining the highest ΔT in this work, and delivering resistive heating performance at the highest tested powers.

### Heat Transfer Coefficient Measurements

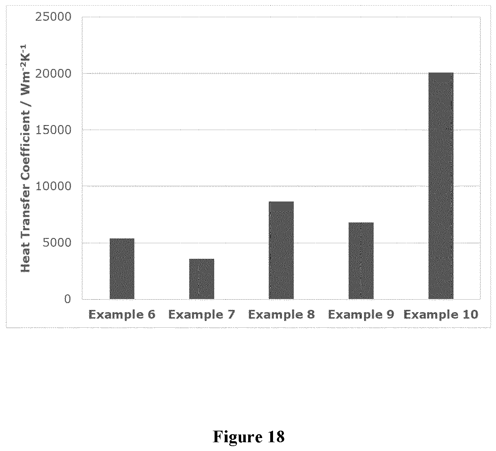

The dependent relationship between ΔT and power can be used to define a heat transfer coefficient for each of the example resistive heaters. The heat transfer coefficient can be calculated graphically from a plot of dQ/dA (the electrical energy divided by the heater geometric surface area) against ΔT. The gradient of the resulting straight line is the heat transfer coefficient. **Figure 18** shows the heat transfer coefficients calculated for Examples 6 - 10. Example 7 shows the lowest heat transfer coefficient, whilst Example 10 shows the highest heat transfer coefficient.

## Claims

1. An apparatus for the catalytic treatment of exhaust gas from an internal combustion engine comprising:
a. a casing having an exhaust gas inlet and a treated exhaust gas outlet; and
b. a heater disposed within the casing, through which exhaust gas can flow;
c. a catalyst article disposed within the casing adjacent to the heater, through which exhaust gas can flow;
wherein the heater comprises an electrically resistive wire mounted on an electrically insulating frame.

2. An apparatus as claimed in claim 1 wherein the casing comprises a metallic sleeve.

3. An apparatus as claimed in claim 1 or claim 2 wherein the catalyst article is selected from a diesel particulate filter (DPF), a lean NOx trap (LNT), a lean NOx catalyst (LNC), a selective catalytic reduction (SCR) catalyst, a diesel oxidation catalyst (DOC), a catalysed soot filter (CSF), a selective catalytic reduction filter (SCRF™) catalyst, an ammonia slip catalyst (ASC), a cold start catalyst (dCSC), a gasoline particulate filter (GPF) and a three-way catalyst (TWC).

4. An apparatus as claimed in any preceding claim wherein the catalyst article is disposed downstream of the heater.

5. An apparatus as claimed in any preceding claim wherein the electrically resistive wire comprises an electrically resistive metal or metal alloy.

6. An apparatus as claimed in claim 5 wherein the electrically resistive wire comprises silver, gold, platinum, rhodium, ruthenium, iron, chrome, titanium or an alloy of one or more thereof.

7. An apparatus as claimed in claim 6 wherein the electrically resistive wire comprises a metal alloy comprising nickel and chromium.

8. An apparatus as claimed in claim 7 wherein the electrically resistive wire is a Nichrome wire.

9. An apparatus as claimed in claim 6 wherein the the electrically resistive wire comprises a metal alloy comprising nickel and titanium.

10. An apparatus as claimed in any preceding claim wherein the electrically resistive wire has a substantially circular cross-section having a diameter in the range ≥ 0.1 to ≤ 2 mm, preferably ≥ 0.2 to ≤ 1.5 mm.

11. An apparatus as claimed in any preceding claim wherein the electrically insulating frame comprises an annular member and one or more cross-members.

12. An apparatus as claimed in any of claims 1 to 10 wherein the electrically insulating frame comprises a disc having a plurality of channels extending therethrough.

13. An apparatus as claimed in any of claims 1 to 10 wherein the electrically insulating frame takes the form of a static mixer, wherein the catalyst article is an SCR catalyst and is disposed downstream of the heater, and wherein the apparatus further comprises a means for introducing urea or ammonia precursor into the casing upstream of the heater.

14. An apparatus as claimed in any preceding claim wherein the electrically insulating frame comprises a ceramic substrate.

15. An apparatus as claimed in any preceding claim wherein the frame comprises catalytic material.
